Europäisches Patentamt

European Patent Office

Office européen des brevets

(11) Publication number: **0 280 455**
**A2**

(12) **EUROPEAN PATENT APPLICATION**

(21) Application number: 88301264.3

(22) Date of filing: 16.02.88

(51) Int. Cl.⁴: **C08L 23/04** , **C08L 29/04** , **C08L 51/06** , **C08L 67/00** , **C08L 77/00**

(30) Priority: 25.02.87 GB 8704385

(43) Date of publication of application:
31.08.88 Bulletin 88/35

(84) Designated Contracting States:
BE DE FR GB IT NL SE

(71) Applicant: **DU PONT CANADA INC.**
**Box 2200 Streetsville Postal Station**
**Mississauga Ontario L5M 2H3(CA)**

(72) Inventor: **Breck, Alan Keith**
**837 Danbury Road**
**Kingston Ontario, K7M 6G7(CA)**
Inventor: **St.-Cyr, Daniel**
**8172 Talcy Avenue**
**Anjou Quebec, H1K 1B9(CA)**

(74) Representative: **Ellis, John Clifford Holgate et al**
**MEWBURN ELLIS & CO. 2/3 Cursitor Street**
**London EC4A 1BQ(GB)**

(54) **Process for the injection moulding of articles having barrier properties.**

(57) A process for the manufacture, in an injection moulding process, of articles having barrier properties, is disclosed. The process comprises feeding an admixture of 20-87.5 percent of polyethylene and/or ethylene/vinyl acetate copolymer, 5-40 percent of at least one of polyamide, ethylene/vinyl alcohol copolymer, polyvinyl alcohol and polyester, and 7.5-40 percent of an alkylcarboxyl-substituted polyolefin to injection moulding apparatus, heating the admixture to a temperature above the melting point of all components of the admixture under conditions that minimize admixing of the admixture and then injecting the resultant heterogeneous molten mixture into a mould. The process may be used to manufacture articles e.g. containers, intended for use with foodstuffs and the like that have improved barrier properties with respect to a number of substances e.g. oxygen.

EP 0 280 455 A2

## PROCESS FOR THE INJECTION MOULDING OF ARTICLES HAVING BARRIER PROPERTIES

The present invention relates to a process for the injection moulding of articles having barrier properties from admixtures of polyethylene and/or ethylene/vinyl acetate copolymers (EVA) with polymers incompatible therewith.

Polyolefins are used in a wide variety of end-uses. In particular, such polymers e.g. polyethylene and EVA, are used in injection moulding processes for the fabrication of moulded articles. As used herein, polyethylene refers to homopolymers of ethylene and copolymers of ethylene with minor amounts of at least one $C_4$ -$C_{10}$ hydrocarbon alpha-olefin.

A particularly important end-use for polyolefins is in the packaging industry, an example of which is the injection moulding of polyethylene to form articles, especially containers. Polyethylenes used in injection moulding processes may exhibit melt indices in a range of about 0.3 to 120 dg/min, or even higher, depending on the intended end-use of the resultant article and the physical characteristics required in the article. Melt index is inversely related to molecular weight and is measured by the procedure of ASTM D-1238 (Condition E).

Polyolefins exhibit excellent resistance to permeation by water, which may be a useful property in packaging end-uses. However, polyolefins tend to be very permeable to gases and some liquids, especially oxygen and hydrocarbon liquids, and such characteristics limit the usefulness and acceptability of polyolefins as a packaging material in some end uses, especially in the packaging of materials, e.g. foodstuffs, susceptible to, for example, the effects of oxygen.

It is well known in the packaging industry to form laminated and co-extruded structures, especially packaging films. Such structures may have a number of layers, and each layer may be intended to impart particular properties to the structure. For example, the structure may contain layers intended to be impermeable to water, oxygen, carbon dioxide, fats and oils and the like. Multi-layer structures in the form of, in particular, film and bottles, are disclosed in U.S. Patents 3 857 754 and 3 975 463, both of S. Hirata et al., which issued 1974 December 31 and 1976 August 17, respectively. A process for the manufacture of shaped articles from a heterogeneous blend in which the blend in molten form is stretched 100-500 percent in at least one direction, is disclosed in U.S. Patent 4 410 482 of P. M. Subramanian, which issued 1983 October 18. Laminar articles are disclosed by P. M. Subramanian in U.S. Patent 4 444 817, which issued 1986 April 24. Each of the above patents discloses multi-component polymer compositions.

It has now been found that admixtures of polyethylene and/or EVA with polymers incompatible therewith may be formed into articles exhibiting reduced permeability to a number of materials, using an injection moulding process.

Accordingly, the present invention provides a process for the manufacture of articles comprising the steps of:

A. forming in injection moulding apparatus a heterogeneous molten mixture of

(a) 20-87.5 percent by weight of a first polymer selected from the group consisting of homopolymers of ethylene, copolymers of ethylene with a minor amount of at least one $C_4$ -$C_{10}$ hydrocarbon alpha-olefin and ethylene/vinyl acetate copolymers, and mixtures thereof, said first polymer having a melt index in the range of 5 to 85 dg/min;

(b) 5-40 percent by weight of a second polymer incompatible with said first polymer, said second polymer being selected from the group consisting of (i) polyamide, (ii) ethylene/vinyl alcohol copolymers, (iii) polyvinyl alcohol and (iv) polyester, and mixtures thereof, and

(c) 7.5-40 percent by weight of an alkylcarboxyl-substituted polyolefin,

said mixture being at a temperature above the melting point of each of said first and second polymers and said substituted polyolefin;

B. injecting said heterogeneous mixture into a mould in a manner that maintains the mixture in a heterogeneous form,

C. cooling said mould to a temperature below the melting point of each of said first and second polymers and substituted polymer, and

D. removing the article so formed from said mould.

The present invention is directed to the manufacture of articles using an injection moulding process and especially to the manufacture of articles from a heterogeneous molten mixture of polymers. The heterogeneous mixture is formed from a first polymer, a second polymer that is incompatible with the first polymer and an alkylcarboxyl-substituted polyolefin.

The first polymer may be a homopolymer of ethylene and/or a copolymer of ethylene with at least one $C_4$ -$C_{10}$ hydrocarbon alpha-olefin. Examples of such alpha-olefins are butene-1, hexene-1, octene-1 and 4-methyl pentene-1. Such polymers, which are commercially available, preferably have a density in the range of 0.915 to 0.965 g/cm³, especially in the range of 0.94 to 0.965 g/cm³. Density is measured by the procedure of ASTM D-1505. In addition, the polyethylene preferably has a melt index in the range of about 5 to 85 dg/min, especially in the range of 10 to 65 dg/min. As noted above, melt index is measured by the procedure of ASTM D-1238 (Condition E).

Alternatively, the first polymer may be a copolymer of ethylene and vinyl acetate, which may be referred to herein as EVA. Such polymers are known and are available commercially. In preferred embodiments, the EVA has a vinyl acetate content in the range of about 7.5 to 33% by weight, especially 12 to 28% by weight. Furthermore, the EVA preferably has a melt index in the range of about 0.3 to 45 dg/min, especially in the range of 2.5 to 25 dg/min.

The first polymer may be polyethylene or EVA, or mixtures thereof. The present invention will generally be described hereinafter with reference to polyethylene as the first polymer.

The polyethylene is in admixture with a second polymer that is incompatible with the polyethylene. Such polymer may be a polyamide, an ethylene/vinyl alcohol copolymer, polyvinyl alcohol·or a polyester. The polyamide may be formed by the condensation polymerization of an aliphatic dicarboxylic acid having 6-12 carbon atoms with an aliphatic primary diamine having 6-12 carbon atoms. Alternatively, the polyamide may be formed by the condensation polymerization of an aliphatic lactam or alpha,omega aminocarboxylic acid having 6-12 carbon atoms. In addition the polyamide may be formed by the copolymerization of mixtures of such dicarboxylic acids, diamines, lactams and alpha,omega aminocarboxylic acids.

Examples of dicarboxylic acids are 1,6-hexanedioic acid (adipic acid), 1,7-heptanedioic acid (pimelic acid), 1,8-octanedioic acid (suberic acid), 1,9-nonanedioic acid (azelaic acid), 1,10-decanedioic acid (sebacic acid) and 1,12-dodecanedioic acid. Examples of diamines are 1,6-hexamethylene diamine, 1,8-octamethylene diamine, 1,10 decamethylene diamine and 1,12-dodecamethylene diamine. Examples of alpha,omega aminocarboxylic acids are amino octanoic acid, amino decanoic acid, amino undecanoic acid and amino dodecanoic acid. An example of a lactam is caprolactam.

Preferred examples of the polyamides are polyhexamethylene adipamide and polycaprolactam.

The polymer that is incompatible with the polyethylene may also be an ethylene/vinyl alcohol copolymer. In preferred embodiments, the copolymer has 5-80% by weight of ethylene comonomer and in particular 15-40% by weight of ethylene comonomer. Such polymers are known in the art and may be formed, for example, by saponification of copolymers of ethylene and vinyl esters. Examples of such polymers are the polymers available from Nippon Gohsei, Osaka, Japan under the trademark Soarnol.

The incompatible polymer may also be polyvinyl alcohol, especially melt-processable grades of polyvinyl alcohol.

Alternatively, the incompatible polymer may be a polyester. Such polymers are also well known and may be made by reacting dibasic carboxylic acids with glycols under known conditions. Examples of the carboxylic acids are terephthalic acid, isophthalic acid and the like. Examples of glycols are ethylene glycol, butylene glycol and the like. Preferred examples of the polyesters are polyethylene terephthalate and polybutylene terephthalate.

The third component of the heterogeneous mixture that is fed to the injection moulding apparatus is an alkylcarboxyl-substituted polyolefin. Such a polyolefin will have carboxyl moieties attached to either the backbone of the polyolefin or in side chains on the polyolefin, carboxylic moieties being acid, ester or anhydride groups, or the like, including salts thereof. Such polyolefins may be formed by direct synthesis or by grafting processes, the former being preferred. The manufacture of the substituted polyolefins by direct synthesis is known in the art and examples of the substituted polyolefins are commercially available e.g. copolymers of ethylene and acrylic acid, methacrylic acid and the like; such copolymers may also contain other comonomers e.g. propylene, and/or contain more than one type of monomer having carboxylic acid moieties.

The alkylcarboxyl-substituted polyolefins may also be manufactured by the grafting of an unsaturated carboxylic monomer onto a polyolefin backbone. Grafting methods are known in the art and include the processes disclosed by C.S. Wong and R.A. Zelonka in U.S. Patent 4 612 155, which issued 1986 September 16 and by P.C. Wong in U.K. patent application 86.26353, filed 1986 November 04. Such processes are directed to the melt grafting of monomers onto certain hydrocarbon and ethylene/vinyl ester polymers. The grafting monomer may be selected from the group consisting of ethylenically unsaturated carboxylic acids and ethylenically unsaturated carboxylic acid anhydrides, and derivatives of such acids and anhydrides. Examples of the acids and anhydrides, which may be mono-, di-or poly-functional, are acrylic acid, methacrylic acid, maleic acid, fumaric acid, itaconic acid, crotonic acid, itaconic anhydride, maleic anhydride and substituted maleic anhydride e.g. dimethylmaleic anhydride. Examples of derivatives of the acids are salts, amides, imides and esters. Alternatively, the grafting monomer may be an ethylenically

3

unsaturated hydrocarbon with other functional groups e.g. vinyl pyridine, vinyl silane and unsaturated alcohols.

The mixtures fed to the injection moulding apparatus in the method of the present invention comprise 20-87.5 percent by weight of polyethylene, 5-40 percent by weight of the incompatible polymer and 7.5-40 percent by weight of the alkylcarboxyl-substituted polyolefin. In preferred embodiments, the mixtures comprise 35-80 percent, especially 45-75 percent, by weight of the polyethylene, 5-40 percent, especially 10-35 percent, by weight of incompatible polymer and 7.5-40 percent, especially 10-30 percent, by weight of the substituted polyolefin. The compositions may also contain stabilizers, pigments and other additives, as will be understood by those skilled in the art of injection moulding.

In the method of the present invention, a heterogeneous molten mixture is formed in injection moulding apparatus e.g. by feeding a physical blend of the components of the heterogeneous mixture to the apparatus and then heating the blend to a temperature above the melting point of all polymeric components of the blend under conditions such that a heterogeneous molten mixture is formed i.e. under conditions that minimize· the formation of homogeneous mixtures. In particular, the heterogeneous mixture should be formed in such a manner that any admixing of the components is minimal. The mixture is heated to a temperature above the melting point of all polymeric components so that problems will not be caused in the injection moulding of articles from the mixture. The presence of unmelted components would likely result in uneven or inconsistent moulding of the articles, the presence of weak areas in the resultant articles and/or difficulties in the moulding process per se.

The heterogenous mixture is injected into the mould in a manner that minimizes loss of the heterogenous nature of the molten mixture. For example, injection of the mixture through a narrow gate may result in mixing action in the heterogeneous mixture immediately subsequent to the gate. Thus, it is preferred that the widest practical gate be used in the moulding process. In addition, it is preferred that the moulding process be carried out such that (i) the melt temperature of the mixture does not exceed about 290°C, provided that all components of the mixture are molten, (ii) the extruder screw does not contain elements, including mixing sections, mixing torpedoes and mixing heads, that are intended to facilitate mixing of the mixture, (iii) the speed of rotation of the screw is maintained as low as is practical, (iv) the back pressure in the injection moulding apparatus is zero or at least the minimum attainable, and (v) the temperature profile of the extruder is such that the period of time between the melting of the incompatible polymer and the injection of the heterogeneous mixture into the mould is as short as practical. It will be appreciated that conditions that tend to cause mixing of the mixture will also tend to reduce the effectiveness of the barrier properties of the resultant injection moulded articles.

The article formed in the injection moulding process is cooled to a temperature below the melting point of all of the polymeric components of the heterogenous mixture prior to removal of the article from the mould.

The process of the present invention may be used to manufacture articles, especially containers of various shapes and sizes, that exhibit barrier properties i.e. that are less permeable to a variety of gases and liquids than the same articles manufactured from polyethylene and/or EVA, as used to form the admixture. Preferred articles are containers for the packaging of foodstuffs.

The permeability of a structure having multiple phases may be related, in theory, to the permeability of the structure formed from the related homogeneous or fully dispersed composition and to the related structure having the phases completely separated viz. a coextruded structure. The effectiveness of a multiple phase structure as a barrier may be expressed with reference to the structure of the fully dispersed structure and to the coextruded structure using the formula:

$$\text{Barrier Index, BI} = \frac{P_D - P_S}{P_D - P_C}$$

where $P_D$ is the permeability of the structure of the dispersed composition, $P_S$ is the permeability of the barrier structure e.g. a structure formed using the process of the present invention, and $P_C$ is the permeability of the coextruded structure; it is to be understood that the overall compositions of the barrier structure, the dispersed structure and the coextruded structure are the same. As used herein, permeability is measured by the procedure of ASTM D 3985-81 using a coulometric sensor.

In the determination of Barrier Index, it will usually be most convenient to calculate the values of $P_D$ and $P_C$. The permeability of the dispersed composition, $P_D$, may be calculated using the formula:

$$P_D = P_B \frac{(P_A + 2P_B - 2V_A(P_B-P_A))}{(P_A + 2P_B + V_A(P_B-P_A))}$$

where $P_D$ is as defined above, $P_B$ is the permeability of the matrix polymer, $P_A$ is the permeability of the dispersed or incompatible polymer and $V_A$ is the volume fraction of the matrix polymer. In the terms used to define the heterogeneous mixture above, the matrix is the polyethylene and/or EVA plus substituted polyolefin. Similarly, the permeability of the coextruded structure, $P_C$, may be calculated using the formula:

$$\frac{1}{P_C} = \frac{V_A}{P_A} + \frac{V_B}{P_B}$$

where $P_A$, $P_B$, $P_C$, $V_A$ and $V_B$ are as defined above.

In preferred embodiments of the present invention, the articles formed exhibit a barrier index of at least 0.60, especially at least 0.70, and in particular at least 0.80.

The present invention is illustrated by the following examples:

Example I

Pellets of (i) an ethylene homopolymer having a density of 0.959 g/cm³ and a melt index of 31 dg/min, (ii) polyhexamethylene adipamide (nylon 66) having a relative viscosity of 50, and (iii) a compatibilizer i.e. the alkylcarboxyl-substituted polyolefin, were fed to a Vee blender. Details of the proportions used and the nature of the compatibilizer are given in Table I. The composition was tumble blended for 20 minutes so as to form a homogeneous physical admixture of the components.

The resultant admixture was then fed to an injection moulding machine, which was Model ES 150/60 manufactured by Ludwig Engel Ltd. of Canada. The temperature profile in the injection moulding apparatus was as follows: feed section 160°C, compression section 240°C, metering section 290°C, and nozzle 290°C. A general purpose screw having a compression ratio of 3:1 was used, at a rotation speed of 280 rpm. The admixture fed to the injection moulding machine was injection moulded into plaques measuring 10.62 cm by 13.75 cm by 0.0625 cm.

Further details and the results obtained are given in Table I. The permeability measurements were carried out, at 23°C, using an Oxtran® 10-50 permeability apparatus, manufactured by Modern Controls of Elk River, Minnesota, U.S.A.

This example shows that articles with good barrier properties may be manufactured using the process of the present invention.

Example II

The procedure of Example I was repeated using physical admixtures of composition as set forth in Table II.

In the injection moulding of the physical admixtures, the temperature profile in the injection moulding apparatus was as follows: feed section 160°C, compression section 240°C, metering section 280°C and nozzle 280°C, except that when the incompatible polymer was polyvinyl alcohol the temperatures were 160°C, 200°C, 245°C and 245°C respectively.

The compatibilizer used in all runs was Compatibilizer B of Example I.

Further details and the results obtained are given in Table II.

This example shows that articles having high values of barrier index may be manufactured from a variety of compositions.

## Example III

The procedure of Example I was repeated using a variety of processing conditions. The composition used in all runs of this example was as follows: (i) 45% by weight of an ethylene homopolymer having a density of 0.959 g/cm$^3$ and a melt index of 65 dg/min, (ii) 25% by weight of the compatibilizer identified as Compatibilizer B in Example I, and (iii) 30% by weight of the polyhexamethylene adipamide identified as Polymer G in Example II.

Further details of the experimental conditions are given in Table III. In Run 11, the injection moulding apparatus was operated in a manner similar to that of Example I. In Run 12, the screw speed was reduced, thereby reducing the amount of mixing of the molten composition in the injection moulding apparatus, which resulted in an increase in the barrier index. In Run 13, the back pressure on the screw was increased, which resulted in a substantial decrease in the barrier index as a result of increased mixing of the molten composition in the injection moulding apparatus. In Runs 14 and 15, the melt temperature was reduced by 5°C compared to Runs 11 and 12, which resulted in changes in the permeability of the resultant articles.

This example illustrates that the barrier properties obtained are sensitive to changes in process parameters, but that articles having a barrier index of greater than 0.80 may be obtained.

## Example IV

The procedure of Example I was repeated using a variety of physical admixtures, as set forth in Table IV. The temperatures used in the injection moulding apparatus were the same as those used in Example II, except that for the admixtures containing ethylene/vinyl acetate copolymer when the following temperatures were used: feed section 140°C, compression section 180°C, metering section 225°C and nozzle 225°C.

The results show that articles having a high value of barrier index may be obtained with a variety of compositions.

### TABLE I

| Run No. | 1 | 2 | 3 | 4 | 5 |
|---|---|---|---|---|---|
| Polyethylene (wt. %) | 60 | 60 | 60 | 60 | 100 |
| Nylon (wt. %) | 30 | 30 | 30 | 30 | 0 |
| Compatibilizer | | | | | |
| Type* | A | B | C | D | – |
| (wt. %) | 10 | 10 | 10 | 10 | |
| Permeability** | 4.9 | 4.0 | 4.6 | 7.7 | 41 |
| Barrier Index | 0.85 | 0.90 | 0.87 | 0.72 | – |

* A = ethylene/methacrylic acid copolymer having a comonomer content of 4% and a melt index of 10 dg/min;

6

B = ethylene/methacrylic acid copolymer having a comonomer content of 12% and a melt index of 14 dg/min;

C = zinc ionomer having a comonomer content of 15% and a melt index of 5.5 dg/min;

D = polyethylene, having a density of 0.924 g/cm$^3$ and a melt index of 29 dg/min, melt grafted with 1% by weight of maleic anhydride.

** $10^{-17}$ mol/m.s.Pa

## TABLE II

| Run No. | 6 | 7 | 8 | 9 | 10 |
|---|---|---|---|---|---|
| Polyethylene | | | | | |
| Type* | E | E | F | F | E |
| (wt. %) | 70 | 70 | 70 | 55 | 50 |
| Incompatible | | | | | |
| Polymer, Type* | G | H | J | J | K |
| (wt. %) | 20 | 20 | 20 | 30 | 0 |
| Compatibilizer | | | | | |
| (wt. %) | 10 | 10 | 10 | 15 | 20 |
| Permeability** | 6.2 | 17 | 4.2 | 8.0 | 5.3 |
| Barrier Index | 0.86 | 0.40 | 0.84 | 0.96 | 0.83 |

* E is ethylene/butene-1 copolymer having a density of 0.950 g/cm$^3$ and a melt index of 33 dg/min;

F is ethylene/butene-1 copolymer having a density of 0.924 g/cm$^3$ and a melt index of 53 dg/min;

G is polyhexamethylene adipamide having a relative viscosity of 50;

H is polycaprolactam (nylon 6) having an intrinsic viscosity of 2.5 in m-cresol;

J is ethylene/vinyl alcohol copolymer containing 29% by weight of ethylene and having a melt index of 20 dg/min (measured at 210°C), available under the trade mark Soarnol ZL;

K is amorphous nylon, available under the trade mark Zytel 330 from E.I. du Pont de Nemours and Company.

** $10^{-17}$ mol/m.s.Pa

## TABLE III

| Run No. | 11 | 12 | 13 | 14 | 15 |
|---|---|---|---|---|---|
| Screw speed (rpm) | 280 | 190 | 280 | 280 | 190 |
| Melt Temperature (°C) | 280 | 280 | 280 | 275 | 275 |
| Screw back Pressure* | 0 | 0 | 3450 | 0 | 0 |
| Permeability** | 4.0 | 3.1 | 15 | 3.4 | 3.4 |
| Barrier Index | 0.90 | 0.94 | 0.34 | 0.93 | 0.93 |

* kPa
** $10^{-17}$ mol/m.s.Pa

## TABLE IV

| Run No. | 19 | 20 | 21 | 22 | 23 | 24 |
|---|---|---|---|---|---|---|
| Polymer, Type* | L | M | L | L | N | P |
| (wt. %) | 75 | 75 | 75 | 75 | 75 | 75 |
| Incompatible Polymer, Type* | Q | Q | Q | R | R | R |
| (wt. %) | 15 | 15 | 15 | 15 | 15 | 15 |
| Compatibilizer Type* | B | B | S | S | S | S |
| (wt. %) | 10 | 10 | 10 | 10 | 10 | 10 |
| Permeability** | 6.9 | 6.5 | 6.5 | 9.3 | 4.8 | 2.8 |
| Barrier Index | 0.87 | 0.89 | 0.89 | 0.77 | 0.99 | 1.0 |

\* B is Compatibilizer of Example I;

L is ethylene/butene-1 copolymer having a density of 0.924 $g/cm^3$ and a melt index of 5.1 dg/min;

M is a low density ethylene homopolymer having a density of 0.917 $g/cm^3$ and a melt index of 6.5 dg/min;

N is ethylene/vinyl acetate copolymer having a comonomer content of 12% and a melt index of 8.0 dg/min;

P is ethylene/vinyl acetate copolymer having a comonomer content of 28% and a melt index of 6.0 dg/min;

Q is polyhexamethylene adipamide having a relative viscosity of 50;

R is polycaprolactam having an intrinsic viscosity of 1.9 in m-cresol;

S is ethylene/methacrylic acid copolymer having a comonomer content of 15% and a melt index of 21 dg/min.

\*\* $10^{-17}$ mol/m.s.Pa

## Claims

1. A process for the manufacture of articles comprising the steps of:

A. forming in injection moulding apparatus a heterogeneous molten mixture of

(a) 20-87.5 percent by weight of a first polymer selected from the group consisting of homopolymers of ethylene, copolymers of ethylene with a minor amount of at least one $C_4$-$C_{10}$ hydrocarbon alpha-olefin and ethylene/vinyl acetate copolymers, and mixtures thereof;

(b) 5-40 percent by weight of a second polymer incompatible with said first polymer, said second polymer being selected from the group consisting of (i) polyamide, (ii) ethylene/vinyl alcohol copolymers, (iii) polyvinyl alcohol and (iv) polyester, and mixtures thereof, and

(c) 7.5-40 percent by weight of an alkylcarboxyl-substituted polyolefin,

said mixture being at a temperature above the melting point of each of said first and second polymers and said substituted polyolefin;

9

B. injecting said heterogeneous mixture into a mould in a manner that maintains the mixture in a heterogeneous form,

C. cooling said mould to a temperature below the melting point of each of said first and second polymers and substituted polymer, and

D. removing the article so formed from said mould.

2. The process of Claim 1 in which the incompatible polymer is polyamide.

3. The process of Claim 1 or Claim 2 in which the incompatible polymer is ethylene/vinyl alcohol copolymer.

4. The process of Claim 1 or Claim 2 in which the incompatible polymer is polyvinyl alcohol.

5. The process of Claim 1 or Claim 2 in which the incompatible polymer is polyester.

6. The process of any of Claims 1-5 in which the alkylcarboxyl-substituted polyolefin has been manufactured by direct synthesis.

7. The process of any of Claims 1-5 in which the alkylcarboxyl-substituted polyolefin is a graft copolymer.

8. The process of Claim 6 in which the alkylcarboxyl-substituted polyolefin is a copolymer of ethylene and methacrylic acid.

9. The process of Claim 7 in which the alkylcarboxyl-substituted polyolefin is maleic anhydride grafted polyethylene.

10. The process of any of Claims 1-9 in which the resultant article has a barrier index, as defined herein, of greater than 0.60.

11. The process of any of Claims 1-9 in which the resultant article has a barrier index, as defined herein, of greater than 0.70.

12. The process of any of Claims 1-11 in which the first polymer is a homopolymer of ethylene.

13. The process of any of Claims 1-11 in which the first polymer is a copolymer of ethylene with at least one $C_4$ -$C_{10}$ alpha-olefin.